# EUROPÄISCHE PATENTANMELDUNG

(11) **EP 4 616 700 A1**
(43) Veröffentlichungstag der Anmeldung: **17.09.2025**
(21) Anmeldenummer: 25162548.9
(22) Anmeldetag: 10.03.2025
(51) Int. Cl.: A01D 90/04, A01F 15/10

(54) **SCHNEIDWERK FÜR EINE ERNTEMASCHINE**

(30) Priorität: 12.03.2024 DE 102024106967
(71) Anmelder: Pöttinger Landtechnik GmbH, 4710 Grieskirchen (AT)
(72) Erfinder: PFEIFFER, Stefan, 4710 Grieskirchen (AT); SANDBERGER, Markus, 4710 Grieskirchen (AT)
(74) Vertreter: Thoma, Michael

(57) **Zusammenfassung**

Die vorliegende Erfindung betrifft ein Schneidwerk für eine Erntemaschine, insbesondere einen Ladewagen oder eine Ballenpresse, mit zumindest einem Messer, das in einer Schneidstellung in einen Erntegutkanal hineinragend gehalten ist, wobei das Messer an einem Messerträger beweglich gelagert ist derart, dass das Messer bei Auftreffen eines Hindernisses auf eine Schneide des Messers aus seiner Schneidstellung in eine Ausweichstellung wegbewegbar ist, wobei dem Messer ein von einem Vorspannelement elastisch vorgespannter Rückhalter zum Halten in der Schneidstellung und/oder Entgegenwirken der Bewegung in die Ausweichstellung zugeordnet ist, und wobei ein Entriegler zum Verstellen des Rückhalters in eine Entriegelungsstellung zum Entnehmen des Messers vorgesehen ist. Erfindungsgemäß ist das Vorspannelement einerseits an dem Rückhalter angelenkt und andererseits an einem beweglich gelagerten Spannelementehalter befestigt, der aus einer Messerhaltestellung in eine Messerentnahmestellung bewegbar ist und einen Mitnehmer aufweist, der beim Bewegen des Spannelementehalters in dessen Messerentnahmestellung den Rückhalter bei gespannt bleibendem Vorspannelement in dessen Entriegelungsstellung mitnimmt und in der Messerhaltestellung des Spannelementehalters Bewegungen des Rückhalters aus dessen Haltestellung in die Ausweichstellung entgegen der Vorspannkraft des Vorspannelements zulässt.

## Beschreibung

Die vorliegende Erfindung betrifft ein Schneidwerk für eine Erntemaschine, insbesondere einen Ladewagen oder eine Ballenpresse, mit zumindest einem Messer, das in einer Schneidstellung in einen Erntegutkanal hineinragend gehalten ist, wobei das Messer an einem Messerträger beweglich gelagert ist derart, dass das Messer bei Auftreffen eines Hindernisses auf eine Schneide des Messers aus seiner Schneidstellung in eine Ausweichstellung wegbewegbar ist, wobei dem Messer ein von einem Vorspannelement elastisch vorgespannter Rückhalter zum Halten in der Schneidstellung und/oder Entgegenwirken der Bewegung in die Ausweichstellung zugeordnet ist, und wobei ein Entriegler zum Verstellen des Rückhalters in eine Entriegelungsstellung zum Entnehmen des Messers vorgesehen ist.

Landwirtschaftliche Ballenpressen oder Ladewagen besitzen regelmäßig ein der Aufnahmevorrichtung zugeordnetes Schneidwerk, um von der Aufnahmevorrichtung vom Boden aufgenommenes bzw. in die Ballenformkammer oder den Laderaum gefördertes Erntegut zu zerschneiden. Üblicherweise besitzen die Aufnahmevorrichtungen solcher landwirtschaftlicher Erntemaschinen einen Aufsammelrotor in Form beispielsweise einer Stachelwalze oder Pickup, um das Erntegut vom Boden aufzusammeln oder allgemein ein geeignetes Förderorgan, das Futter vom Boden wegbewegt, beispielsweise in Form eines Förderbands, eines Saugers oder dergleichen, und einen dem Aufnahmerotor bzw. Förderorgan nachgeordneten Förderrotor bzw. ein zweites Förderorgan, der/das der Stachelwalze bzw. dem ersten Förderorgan nachgeordnet ist und das übernommene Erntegut weiter in die Ballenformkammer bzw. den Laderaum fördert. Das vorgenannte Schneidwerk umfasst dabei regelmäßig eine Vielzahl von Messern, die in einen Förderkanal hineinragen, durch den der genannte Förderrotor bzw. das zweite Förderorgan das Erntegut fördert, so dass das Erntegut in dem genannten Förderkanal zerschnitten wird. Ähnliche Schneidwerke können auch bei Häckslern zum Häckseln von Stroh und ähnlichem Halm- und Blattgut zum Einsatz kommen.

Um beim Auftreffen von im Erntegut befindlichen Fremdkörpern wie Steinen größere Beschädigungen an den Messern zu vermeiden, wurde bereits vorgeschlagen, die Messer an dem Messerträger, der sie in den Förderkanal hineinragend hält, beweglich zu lagern, so dass die Messer beim Auftreffen eines Fremdkörpers nachgeben bzw. zurückgeklappt werden können, um dementsprechend dem Fremdkörper auszuweichen bzw. den Fremdkörper passieren zu lassen. Um nach dem Passieren des Fremdkörpers das Messer wieder in seine Schneidstellung zurückzubringen und die Schneidwirkung wieder herzustellen, kann den Messern eine Rückstellvorrichtung zugeordnet werden, die elastisch vorgespannt ist und das Messer wieder in seine Schneidstellung zurückbringt.

Solche Rückstellvorrichtungen umfassen üblicherweise den Messern zugeordnete Rückhalter, die von einem Vorspannelement elastisch vorgespannt sind und das Messer mit der Vorspannkraft in der Schneidstellung halten. Wenn die Vorspannkraft vom auftreffenden Hindernis bzw. den damit einhergehenden Reaktionskräften am Messer überwunden wird, kann das Messer den Rückhalter unter Überwindung der Vorspannkraft zurückdrängen und selbst ausweichen, wobei eine solche Ausweichbewegung das Messer ein Stück weit oder auch ganz aus dem Förderkanal hinaus verschieben und/oder wegklappen kann. Je nach Lagerung des Messers am Messerträger kann diese Aufweichbewegung eine reine rotatorische Kippbewegung oder eine rein lineare Schiebebewegung oder eine Mischform aus beiden Bewegungsarten sein, beispielsweise ein anfängliches Wegschieben, das dann von einem rotatorischen Wegkippen überlagert wird. Eine solche Mischform aus überlagertem Wegschieben und Wegkippen schlägt beispielsweise die Schrift DE 10 2011 013 640 A1 vor, um unabhängig vom Auftreffpunkt des Fremdkörpers und des damit einhergehenden Hebelarms des Fremdkörperimpulses ein gleichermaßen harmonisches Auslösen des Messer in die Ausweichstellung zu erreichen.

Der genannte, elastisch vorgespannte Rückhalter kann individuell einem einzigen Messer oder ggf. auch einer Messergruppe aus bspw. zwei oder drei Messern zugeordnet sein, wobei ein individuelles Halten jedes Messers durch einen einzelnen bzw. nur diesem Messer zugeordneten, elastischen Rückhalter einen hohen Messerschutz bei gleichzeitig hoch bleibender Schneidleistung ermöglicht.

Beispielsweise kann der elastische vorgespannte Rückhalter an einem Rücken des Messers angreifen und das Messer gegen eine an der Messervorderseite vorgesehene Lagerstelle drücken, wobei der Messerrücken eine Senke aufweisen kann, in der ein Eingriffsstück des Rückhalters ruht bzw. eingreift, wenn das Messer in seiner Schneidstellung ist. Beim Auftreffen eines Hindernisses kann der Rückhalter aus der genannte Senke herausbewegt werden und am Messerrücken entlanggleiten bzw. darauf abrollen, wenn das Messer in seine Ausweichstellung verfährt.

Solche Schneidwerke mit elastisch in ihre Schneidstellung vorgespannten Messern sind ferner auch aus den Schriften DE 10 2005 054 429 B4 oder DE 10 2013 022 387 B3 bekannt. Weitere Schneidwerke zeigen die Schriften EP 2 910 105 B1, DE 10 2018 123 990 A1, oder DE 87 068 66 U1.

Um die Messer beispielsweise zum Reinigen des Schneidwerks oder bei Beschädigung eines Messers zum Ersetzen des Messers entnehmen zu können, kann der beweglich gelagerte Rückhalter üblicherweise in eine Entriegelungsstellung verbracht werden, in der der genannte Rückhalter das Messer nicht mehr einspannt bzw. gegen das Widerlager am Messerträger drückt, so dass das Messer ohne vom Rückhalter blockiert zu sein, vom Messerträger abgenommen werden kann. Hierbei ergeben sich bei den vorbekannten Lösungen oftmals Beeinträchtigungen bei der Handhabung.

Zum einen ist es bisweilen mühselig, mehrere Messer oder alle Messer zu entriegeln, da bei etlichen bisherigen Systemen jeder Rückhalter einzeln in seine Entriegelungsstellung bewegt werden muss. Zum anderen beeinträchtigt bisweilen die Vorspannkraft des Vorspannelements eine einfache Handhabung, da die Vorspannkraft, mit der die Rückhalter beaufschlagt sind, erst überwunden werden muss, bevor der jeweilige Rückhalter in die Entriegelungsstellung verbracht werden kann bzw. ist bisweilen auch auf dem Weg des Rückhalters zurück in seine Haltestellung die Vorspannkraft wieder aufzubauen. Da die Messer auch beim normalen, hindernisfreien Schnittbetrieb üblicherweise mit größeren Schnittkräften beaufschlagt werden, ist die Vorspannung oft beträchtlich, so dass das Messer tatsächlich nur bei Auftreffen eines Hindernisses oder bei einem Verstopfen bzw. Schoppern des Ernteguts ausweichen kann. Solche hohen Vorspannkräfte sind jedoch schwierig von Hand zu überwinden, wenn der Rückhalter von Hand in seine Entriegelungsstellung bewegt und hierfür die Vorspannkraft überwunden werden soll. Diese Problematik verschärft sich nochmals, wenn mehrere Rückhalter gleichzeitig bzw. gemeinsam entriegelt werden sollen/können, da sich dann die Vorspannkräfte der mehreren Rückhalter aufsummieren.

Der vorliegenden Erfindung liegt daher die Aufgabe zugrunde, eine verbesserte Erntemaschine der genannten Art zu schaffen, die Nachteile des Standes der Technik vermeidet und Letzteren in vorteilhafter Weise weiterbildet. Insbesondere soll eine komfortable und mit geringem Kraftaufwand auskommende Entriegelung und Wiederverriegelung der elastisch vorgespannten Rückhalter ermöglicht werden, um ein einfaches Entnehmen und Wiederverriegeln der Messer am Messerträger zu gestatten.

Erfindungsgemäß wird die genannte Aufgabe durch eine Erntemaschine gemäß Anspruch 1 gelöst, wobei bevorzugte Ausgestaltungen der Erfindung Gegenstand der abhängigen Ansprüche sind.

Es wird also vorgeschlagen, das Vorspannelement beim Verbringen des Rückhalters in die Entriegelungsstellung gar nicht erst oder zumindest nicht wesentlich zu entspannen, so dass beim Entriegeln bzw. Verriegeln die Vorspannung gar nicht überwunden werden muss und der Rückhalter auch in der Entriegelungsstellung im Wesentlichen mit derselben Vorspannkraft beaufschlagt wird, die den Rückhalter auch in der Haltestellung beaufschlagt, wenn der Rückhalter das Messer schnittbereit in der Schneidstellung hält. Erfindungsgemäß ist das Vorspannelement einerseits an dem Rückhalter angelenkt und andererseits an einem beweglich gelagerten Spannelementehalter befestigt, der aus einer Messerhaltestellung in eine Messerentnahmestellung bewegbar ist und einen Mitnehmer aufweist, der beim Bewegen des Spannelementehalters in dessen Messerentnahmestellung den Rückhalter bei gespannt bleibendem Vorspannelement in dessen Entriegelungsstellung mitnimmt und in der Messerhaltestellung des Spannelementehalters Bewegungen des Rückhalters aus dessen Haltestellung in die Ausweichstellung entgegen der Vorspannkraft des Vorspannelements zulässt. Der Mitnehmer kann dabei in der schnittbereiten Arbeitsstellung des Rückhalter bei in Schneidstellung befindlichem Messer passiv bzw. ohne Funktion sein bzw. mit dem genannten Rückhalter erst in Eingriff geraten, um die Vorspannkräfte am Rückhalter aufzufangen, wenn der Spannelementehalter aus seiner Arbeitsstellung wegbewegt wird, um in die Messerentnahmestellung bewegt zu werden, d.h. der Mitnehmer wird erst aktiv, wenn der Spannelementehalter aus seiner Arbeitsstellung zur Messerentnahmestellung hin bewegt wird, und nimmt den Rückhalter erst mit, wenn der Spannelementehalter aus der Arbeitsstellung herausbewegt wird.

Der genannte Mitnehmer verhindert also Bewegungen des Rückhalters in eine Richtung, die zu einer Entspannung des Vorspannelements führen würde, und lässt Bewegungen des Rückhalters in die entgegengesetzte Richtung, in der das Vorspannelement noch weiter gespannt werden würde, zu, wobei die genannten Bewegungen in die erstgenannte Richtung, die zu einem Entspannen des Vorspannelements führen würden, insbesondere dann verhindert werden, wenn der Spannelementehalter aus seiner Messerhaltestellung in seine Messerentnahmestellung bewegt wird.

Der Spannelementehalter kann im Wesentlichen ohne Überwindung der Vorspannkräfte des Vorspannelements bewegt werden, so dass ein Entriegeln und Wiederverriegeln eines Messers ohne großen Kraftaufwand möglich ist, wobei vorteilhafterweise die Verstellbewegung des Spannelementehalters derart auf den Rückhalter und das davon zu haltende Messer abgestimmt sein kann, dass der Rückhalter seine für den Schnittbetrieb bestimmte Eingriffsstellung am Messer erst oder genau dann erreicht, wenn der Vorspannelementeträger seine Messerhaltestellung vollständig erreicht bzw. unmittelbar bevor er diese Messerhaltestellung erreicht. Hierdurch kann der vollständige oder zumindest überwiegende Teil des Verstellwegs des Spannelementehalters zwischen Messerentnahmestellung und Messerhaltestellung ohne Beeinflussung durch die Vorspannkraft des Vorspannelements überfahren werden.

Bei vollständigem Erreichen der Messerhaltestellung des Spannelementehalters gerät dann das Messer passgenau in Eingriff mit dem Rückhalter, so dass das Messer in seiner Schneidstellung gehalten wird und die Vorspannkraft des Vorspannelements erst dann überwunden bzw. weiter vergrößert werden muss, wenn das Messer von einem Hindernis getroffen ausweichen will. Dabei bewegt sich dann der Spannelementehalter bzw. Vorspannelementehalter nicht bzw. verbleibt dieser in seiner Messerhaltestellung fixiert, und die Verstellbewegung des Messers zur Ausweichstellung hin erzwingt ein Verstellen des Rückhalters relativ zum Spannelementehalter. Solche Bewegungen des Rückhalters relativ zum Spannelementehalter, die zu einer Erhöhung der Vorspannung bzw. zu einem weiteren Spannen des Vorspannelements führen, behindert der genannte Mitnehmer nicht.

In Weiterbildung der Erfindung kann das genannte Vorspannelement, das einerseits am Rückhalter angelenkt und andererseits an dem beweglichen Spannelementehalter eingehängt bzw. angelenkt sein kann, ein Federelement bilden bzw. als Feder ausgebildet sein, die durch Relativbewegung des Rückhalters relativ zum Spannelementehalter verformt wird, beispielsweise gelängt wird, wenn die Feder als Schraubenfeder bzw. Zug- oder Druckfeder ausgebildet ist, oder auch winkelverformt werden kann, wenn die Feder beispielsweise als Spiralfeder ausgebildet ist. Als Federelement kann dabei eine mechanische Feder bspw. in Form der genannten Schrauben- oder Spiralfeder, aber auch eine Gasdruckfeder oder ein druckmittelbeaufschlagter Zylinder vorgesehen sein.

Vorteilhafterweise kann das genannte Vorspannelement einerseits direkt am Rückhalter und andererseits direkt an dem Spannelementehalter abgestützt sein, so dass die Vorspannkräfte direkt in den Rückhalter bzw. den Spannelementehalter eingeleitet werden. Hierdurch kann ein direktes und feinfühliges Ansprechen des elastisch vorgespannten Rückhalters erreicht werden, wenn ein Hindernis auf das Messer trifft. Grundsätzlich wäre es aber auch möglich, die Vorspannkraft über ein Gestänge oder ein Getriebe zu übersetzen und in den Rückhalter bzw. den Spannelementehalter einzuleiten. Die direkte Abstützung des Vorspannelements an Rückhalter und Spannelementehalter gestattet über das direkte Ansprechen hinaus aber auch eine einfache, leicht bauende und kompakte Anordnung.

In Weiterbildung der Erfindung kann der Mitnehmer am Rückhalter einen Eingriffs- bzw. Angriffspunkt aufweisen, der vom Eingriffs- bzw. Angriffspunkt des Vorspannelements am Rückhalter beabstandet ist, so dass der Mitnehmer und das Vorspannelement unabhängig voneinander am Rückhalter angreifen können. Dies erlaubt nicht nur eine saubere Trennung der Funktionen von Mitnehmer und Vorspannelement, sondern auch eine einfache, voneinander unabhängige Einstellung von Mitnahmeposition einerseits und Vorspannkraft andererseits.

Dabei kann es vorteilhaft sein, die beiden Eingriffs- bzw. Angriffspunkte von Vorspannelement einerseits und Mitnehmer andererseits so zu wählen, dass der Mitnehmer am Rückhalter einen größeren Hebelarm hat als das Vorspannelement, wobei der genannte Hebelarm bezüglich einer Schwenkachse des Rückhalters wirksam sein kann. Hierdurch kann eine gewisse Untersetzung erreicht werden, die den Mitnehmer beim Angreifen am Rückhalter mit vergleichsweise kleineren Kräften beaufschlagt als vom Vorspannelement auf den Rückhalter als Vorspannkräfte gegeben werden. Gleichzeitig kann durch den vergleichsweise kleineren Hebelarm des Vorspannelements erreicht werden, dass das Vorspannelement bei auch größeren Stellbewegungen des Rückhalters im Arbeitsbetrieb keine übermäßigen Ausgleichsbewegungen ausführen muss, während andererseits der größere Hebelarm des Mitnehmers eine feine Justage seiner Eingriffsposition ermöglicht.

Alternativ kommt es aber auch eine umgekehrte Anbindung in Betracht, nämlich die Eingriffs- bzw. Angriffspunkte von Vorspannelement einerseits und Mitnehmer andererseits so zu wählen, dass der Mitnehmer am Rückhalter einen kleineren Hebelarm hat als das Vorspannelement. Ggf. kommt auch eine Anordnung mit gleichen Hebelarmen in Betracht.

Der genannte Mitnehmer kann einen Anschlag bilden, der eine Bewegung des Rückhalters relativ zum Spannelementehalter in eine für das Vorspannelement entspannende Richtung verhindert, und zwar vorzugsweise auch dann, wenn der Spannelementehalter aus seiner Betriebs- bzw. Messerhaltestellung in seine Außerbetriebs- bzw. Messerentnahmestellung bewegt wird. Hierdurch wird die Vorspannung des Vorspannelements gehalten, die das Vorspannelement auch in der Betriebsstellung auf den Rückhalter und damit der Rückhalter auf das Messer ausübt.

Der Mitnehmer kann beispielsweise von einem Konturpaar gebildet sein, das gegeneinander fahrbare Konturen am Rückhalter einerseits und am Spannelementehalter andererseits umfassen kann. Beispielsweise kann am Spannelementehalter ein Vorsprung ausgebildet sein, gegen den der Rückhalter fahren kann, wenn er sich unter der Vorspannung in entsprechende Richtung bewegen will. Als Mitnehmer können aber auch separate Anbauteile fungieren bzw. kann das genannte Konturpaar auch von verstellbaren Elementen gebildet sein, die am Spannelementehalter und/oder am Rückhalter montiert sein können, um die Mitnahmestellung einstellen zu können. Beispielsweise kann ein verstellbarer Anschlag vorgesehen sein, der beispielsweise von einer Stellschraube verstellt oder von dieser gebildet sein kann.

Alternativ oder zusätzlich kann auch ein Exzenter als einstellbarer Mitnehmer vorgesehen sein, der exzentrisch verdrehbar gelagert sein kann, um durch Verdrehen die Mitnehmer- bzw. Anschlagskontur zu verschieben.

Ein solchermaßen verstellbarer Mitnehmer kann insbesondere von Vorteil sein, um einen spielfreien Sitz des Rückhalters an der Eingriffskontur des Messers sicherzustellen, wenn der Spannelementehalter in seiner schnittbereiten Messerhaltestellung ist. Insbesondere kann durch Positionseinstellung des Mitnehmers sichergestellt sein, dass in der besagten, betriebsbereiten Messerhaltestellung der Rückhalter unter Entfaltung der Vorspannkraft des Vorspannelements gegen das Messer drücken bzw. an diesem ziehen kann, während andererseits der Mitnehmer direkt den Rückhalter bzw. eine entspannende Bewegung des Rückhalters blockiert und das Vorspannelement vorgespannt hält, sobald der Spannelementehalter beginnt, aus seiner Messerhaltestellung mitbewegt zu werden.

Unabhängig von der konkreten Ausbildung der Einstellvorrichtung für den Mitnehmer als Exzenter oder verschiebbarer bzw. verstellbarer Anschlag oder in anderer Weise positionsveränderbares Element kann der Mitnehmer in vorteilhafter Weiterbildung der Erfindung unabhängig von dem Vorspannelement verstellt bzw. eingestellt werden. Insbesondere ist die Einstellbarkeit des Mitnehmers derart beschaffen, dass der Mitnehmer verstellt werden kann, ohne dass dies Auswirkungen auf die Vorspannkraft des Vorspannelements hätte. Vorteilhafterweise kann der Mitnehmer auch ohne einwirkende Vorspannkraft verstellt werden, d.h. der Mitnehmer kann in seiner Position verstellt werden, ohne dass dies von der Vorspannkraft des Vorspannelements behindert oder beeinträchtigt werden würde.

Insbesondere können separate Einstellvorrichtungen zum voneinander unabhängigen Einstellen der Mitnahmeposition des Mitnehmers einerseits und der Vorspannung des Vorspannelements andererseits vorgesehen sein. Durch solche unabhängigen Einstellvorrichtungen ist es auch möglich, die Vorspannung, mit der der Rückhalter das Messer in seiner Schneidstellung hält bzw. bei Auslenkungen wieder zurückzustellen versucht, zu vergrößern oder zu verkleinern, ohne dass die Mitnahmeposition bzw. die Einstellung des Mitnehmers verändert wird. Andererseits kann die Mitnahmeposition des Mitnehmers, d.h. wenn der Mitnehmer beim Wegbewegen des Spannelementehalters aus seiner Arbeitsstellung hin zur Messerentnahmestellung den Rückhalter mitnimmt, verstellt werden, ohne dass dies zu einer Verstellung der Vorspannung des Vorspannelements führen würde.

**In** vorteilhafter Weiterbildung der Erfindung können der Rückhalter und der Spannelementehalter jeweils schwenkbar um eine Schwenkachse gelagert sein, so dass der Rückhalter in der Messerhaltestellung relativ zum Spannelementehalter verschwenken und ggf. auch relativ zum Messer verschwenden bzw. auf dessen Rücken abgleiten oder abrollen kann, wenn das Messer zu seiner Ausweichstellung hin getrieben wird. Zum anderen kann der Spannelementehalter verschwenkt werden, um zwischen Messerhaltestellung und Messerentnahmestellung zu verfahren.

Der Rückhalter und der Spannelementehalter können dabei vorteilhafterweise um zueinander parallele und nahe beieinanderliegende Achsen verschwenken, wobei der Rückhalter an dem Spannelementehalter schwenkbar gelagert sein kann, so dass der Mitnehmer den Rückhalter mitnehmen kann, wenn der Spannelementehalter verschwenkt wird. Genauer gesagt kann das Vorspannelement den Rückhalter gegen den Mitnehmer fahren bzw. kann der Rückhalter durch das Vorspannelement gegen den Mitnehmer gespannt sein, wenn der Spannelementehalter mitsamt Vorspannelement und Rückhalter aus der Messerhaltestellung in die Messerentnahmestellung verschwenkt wird. Wird umgekehrt der Spannelementehalter in die Messerhaltestellung zurückgeschwenkt, verbleibt der Rückhalter an sich in seiner gegen den Mitnehmer gespannten Stellung, bis der Rückhalter das Messer erreicht bzw. mit der vorbestimmten Rückhaltekontur am Messer in Eingriff gerät. Gegebenenfalls kann hier der Rückhalter auf den allerletzten Prozent bzw. Bruchteilen der Verstellwegs des Spannelementehalters vom Mitnehmer entfernt werden, wenn der Rückhalter am Messer ansteht, bevor der Spannelementehalter seine Messerhaltestellung vollständig erreicht hat. Hierdurch ist sichergestellt, dass auch bei Fertigungstoleranzen das Messer spielfrei vom Rückhalter in der Schneidstellung gehalten werden kann und dabei die bestimmungsgemäße Vorspannkraft des Rückhalters bereitsteht.

Der Rückhalter muss jedoch nicht am Spannelementehalter gelagert sein, sondern kann beispielsweise auch direkt am Messerträger bzw. einer damit verbundenen Konsole oder einem damit verbundenen Träger beweglich gelagert sein.

Insbesondere können der Rückhalter und der Spannelementehalter um eine gemeinsame Schwenkachse bzw. um zueinander koaxiale Schwenkachsen schwenkbar gelagert sein. In diesem Fall braucht der Spannelementehalter nur die Vorspannkräfte des Vorspannelements aufnehmen und braucht nicht auch noch die Reaktionskräfte des Rückhalters aufnehmen, welche direkt in die Schwenkachse und über diese beispielsweise in den Messerträger oder eine damit verbundene Konsole oder Trägerelement eingeleitet werden kann.

Beispielsweise kann ein gemeinsamer Schwenkachsbolzen zum schwenkbaren Lagern sowohl des Rückhalters als auch des Vorspannelementeträgers vorgesehen sein, wobei der genannte gemeinsame Schwenkachsbolzen beispielsweise am Messerträger oder einem damit verbundenen Trägerteil befestigt sein kann.

Durch eine koaxiale schwenkbare Lagerung von Rückhalter und Vorspannelementeträger erfährt der Rückhalter beim Verschwenken des Spannelementehalters in dessen Messerentnahmestellung eine rein rotatorische Bewegung, die ein sauberes Lösen des Rückhalters von der Rückhaltekontur, beispielsweise aus der Rückhaltersenke des Messers am Messerrücken gestattet. Ist andererseits der Rückhalter zur Schwenkachse des Spannelementehalters leicht versetzt schwenkbar am Spannelementehalter gelagert, erfährt der Rückhalter auch im Bereich seiner Schwenkachse eine leichte Kreisbahnbewegung.

Alternativ zu einer rotatorischen Lösung wäre es jedoch auch möglich, eine translatorische Verschieblichkeit für den Spannelementehalter vorzusehen. Insbesondere könnte der Spannelementehalter in einer Richtung auf den Messerrücken zu und vom Messerrücken weg verschieblich gelagert sein, um den Rückhalter zwischen seiner Rückhaltestellung und seiner Entriegelungsstellung hin und her bewegen zu können. Dabei kann der Rückhalter schwenkbar am Spannelementehalter gelagert und durch den beschriebenen Mitnehmer in der vorgespannten Stellung gehalten werden, wenn der Spannelementehalter mitsamt dem Rückhalter vom Messerrücken weg bewegen wird.

Bei der beschriebenen rotatorischen Lösung ist es jedoch einfacher, den Spannelementehalter in der Messerhaltestellung zu fixieren bzw. die vom Vorspannelement initiierten Reaktionskräfte abzufangen.

Der Spannelementehalter kann in Weiterbildung der Erfindung durch einen Fixiermechanismus in der Messerhaltestellung fixiert werden, um sicherzustellen, dass der Rückhalter in seiner schnittbereiten Messerhaltestellung verbleibt, wenn die Maschine in Betrieb genommen wird bzw. in Betrieb ist.

Um eine einfache Bedienung ohne großen Kraftaufwand zu gestatten, kann der Fixiermechanismus in vorteilhafter Weiterbildung der Erfindung einen Hebelmechanismus mit einem Stellhebel zum Verstellen des Spannelementehalters aufweisen, wobei der genannte Stellhebel vorteilhafterweise derart gelagert und angeordnet sein kann, dass der Stellhebel in eine überstreckte Stellung fährt, so dass vom Spannelementehalter her induzierte Kräfte den Stellhebel nicht zurück, sondern noch weiter in die Fixierstellung treiben wollen bzw. würden, wenn dies gehen würde. Vorteilhafterweise kann ein Kniehebel zum Verstellen des Spannelementehalters vorgesehen sein, der den Stellelementehalter in der Messerhaltestellung fixiert und umgekehrt bei Betätigen des Kniehebels den Stellelementehalter in die Messerentnahmestellung verfährt.

Insbesondere kann ein Zweischlag-ähnlicher Hebelmechanismus vorgesehen sein, der einen schwenkbar gelagerten Betätigerhebel aufweist, der ähnlich einer Skischuhschnalle geöffnet und umgekehrt in eine geschlossene, überstreckte Stellung verschwenkt werden kann. An dem genannten Betätigerhebel kann der zuvor genannte Stellhebel gelenkig befestigt sein, so dass der Betätigerhebel beim Verschwenken den Stellhebel mitnimmt, welcher wiederum am Spannelementehalter gelenkig angelenkt sein kann und diesen zwischen seiner Messerhaltestellung und seiner Messerentnahmestellung verfährt.

Alternativ oder zusätzlich zu einem solchen Hebelmechanismus ist es aber auch möglich, den Spannelementehalter in der Messerhaltestellung durch einen Riegel zu sichern, beispielsweise durch einen türklinkenähnlichen Schnapper, der den Spannelementehalter festhält und formschlüssig verriegelt, wenn dieser in die Messerhaltestellung gefahren wird. Der genannte Schnapper kann beispielsweise eine schwenkbare Sperrklinke aufweisen, in deren Rastmaul der Spannelementehalter bzw. ein damit verbundenes Rastelement einfahren kann, wenn der Spannelementehalter in seine Messerhaltestellung verfahren wird, während umgekehrt der Spannelementehalter in besagtem Rastmaul gefangen bleibt, wenn nicht die Sperrklinke geöffnet wird.

Alternativ oder zusätzlich zu einer solchen Sperrklinkenlösung kann der Spannelementehalter aber auch beispielsweise durch einen Stellaktor zwischen seinen Messerhalte- und -entnahmestellungen hin und her verfahren und in der jeweiligen Stellung verriegelt werden, insbesondere in der Messerhaltestellung, beispielsweise durch Blockieren oder Einbremsen des genannten Stellaktors. Beispielsweise kann ein Druckmittelzylinder als Stellaktor vorgesehen sein, der durch Absperren einer oder mehrerer Druckkammern beispielsweise durch ein oder mehrere Ventile in der jeweiligen Stellung verriegelt bzw. eingebremst werden kann.

Die Erfindung wird nachfolgend anhand bevorzugter Ausführungsbespiele und zugehörigen Zeichnungen näher erläutert. In den Zeichnungen zeigen:
- Fig. 1:: eine Seitenansicht eines Schneidwerks einer landwirtschaftlichen Erntemaschine nach einer vorteilhaften Ausführung der Erfindung, die ein Messer des Schneidwerks in einer schnittbereiten Schneidstellung zeigt, in der ein elastisch vorgespannter Rückhalter mit einer Eingriffskontur am Rücken des Messers in Eingriff steht und das Messer elastisch vorgespannt in der Schneidstellung hält,
- Fig. 2:: eine Seitenansicht des Schneidwerks ähnlich Fig. 1, wobei die Darstellung teiltransparent bzw. strichliert dargestellt ist, um verdeckte Konturen zu zeigen, insbesondere die schwenkbare Lagerung des Rückhalters einerseits und des Spannelementehalters andererseits an einer gemeinsamen Schwenkachse, sowie die Fixierung des Stellhebelmechanismus zum Verstellen des Spannelementehalters, wobei das Messer in seiner Schneidstellung und der Rückhalter in seiner schnittbereiten Messerhaltestellung gezeigt ist,

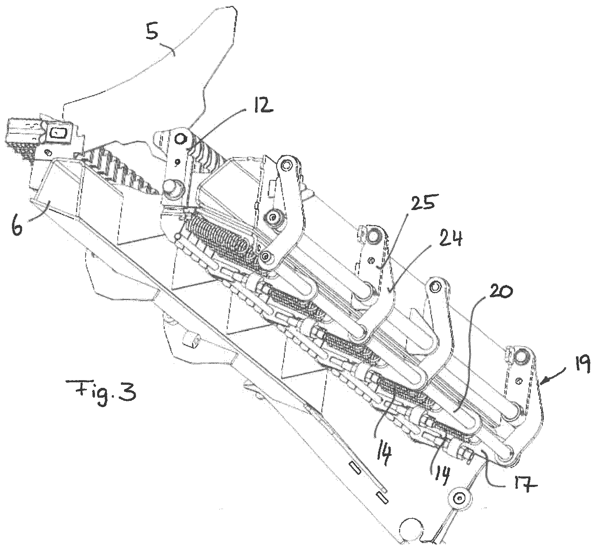

- Fig. 3:: eine perspektivische Darstellung des Schneidwerks aus Fig. 1, die die gemeinsame bzw. zentrale Verstellbarkeit mehrerer Spannelementehalter und mehrerer Rückhalter zum zentralen Entriegeln mehrerer Messer zeigt,
- Fig. 4:: eine Seitenansicht des Schneidwerks aus den vorhergehenden Figuren in einer Darstellung ähnlich Fig. 1, wobei der Stellhebelmechanismus zum Verstellen des Spannelementehalters in einer entriegelten Stellung bzw. in einer frühen Phase der Verstellung aus der Messerhaltestellung in die Messerentnahmestellung gezeigt ist, bei der der Rückhalter noch in der Rückhaltekontur am Rücken des Messers sitzt,
- Fig. 5:: eine Seitenansicht des Schneidwerks ähnlich Fig. 4, wobei der Stellhebelmechanismus und der davon verstellte Spannelementehalter in einer weiter aufgefahrenen Stellung bzw. in einer Endphase der Verstellung zur Messerentnahmestellung hin dargestellt sind, wobei der Rückhalter aus der Rückhaltekontur am Rücken des Messers herausgefahren und das Messer entriegelt und bereit für die Entnahme ist,
- Fig. 6:: eine perspektivische Darstellung des Schneidwerks ähnlich der Darstellung der Fig. 3, wobei die Messer in der entriegelten, entnahmebereiten Stellung gemäß Fig. 5 gezeigt sind,

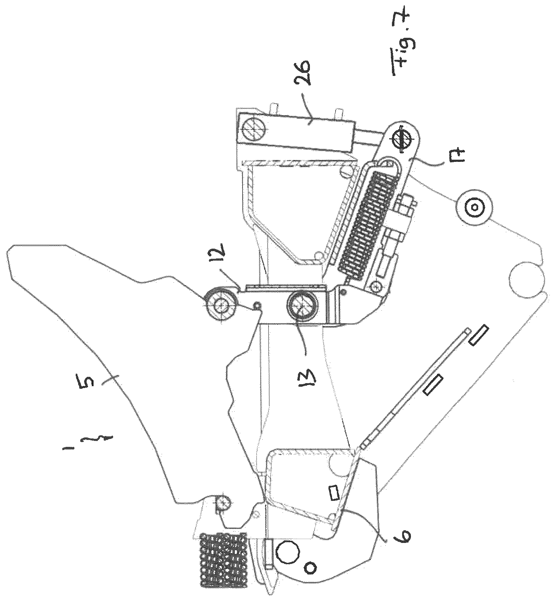

- Fig. 7:: eine Seitenansicht des Schneidwerks ähnlich Fig. 1, wobei in alternativer Ausführung der Erfindung der Spannelementehalter nicht durch einen Kniehebelmechanismus, sondern durch einen Druckmittelaktor verstellbar ist,
- Fig. 8:: eine ausschnittsweise vergrößerte Seitenansicht des Schneidwerks aus den vorhergehenden Figuren, die den verstellbaren Mitnehmer zeigt, der beim Verschwenken des Spannelementehalters den Rückhalter mitnimmt und das Vorspannelement in vorgespannter Stellung hält, wobei der Mitnehmer über eine Stellschraube einstellbar ist,
- Fig. 9:: eine ausschnittsweise vergrößerte Seitenansicht des Schneidwerks ähnlich Fig. 8, die einen festen Mitnehmer zeigt, und
- Fig. 10:: eine ausschnittsweise vergrößerte Seitenansicht des Schneidwerks ähnlich den Figuren 8 und 9, wobei ein verstellbarer Mitnehmer in Form eines Exzenters vorgesehen ist.

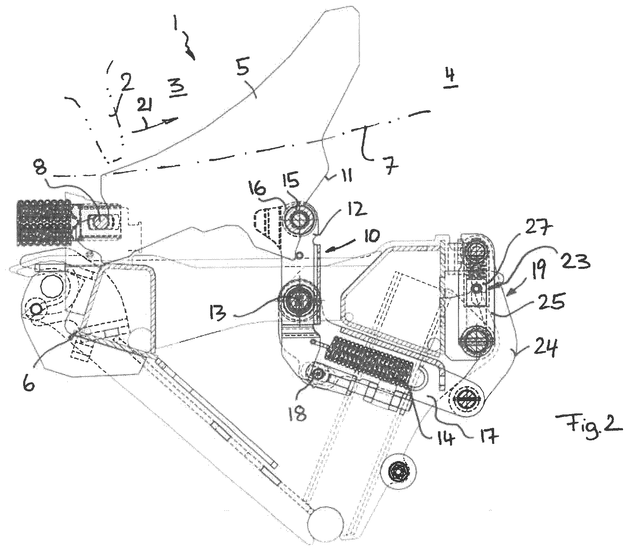

Das in den Figuren gezeigte Schneidwerk 1 kann bei Ladewagen oder Ballenpressen Verwendung finden, die an einen nicht eigens gezeigten Schlepper angebaut werden können und mittels einer rotierenden Stachelwalze beispielsweise in Form einer Pickup Erntegut in Form von Gras, Heu oder Stroh vom Boden aufsammeln können. Das aufgesammelte Erntegut wird von der genannten Pickup an einen Förderrotor 2 übergeben, vgl. Figur 2, der das Erntegut durch einen Förderkanal 3 hindurch in einen Laderaum bzw. eine Ballenformkammer 4 fördert.

Das genannte Schneidwerk 1 umfasst dabei nebeneinander aufgereiht mehrere Messer 5, die an einem Messerträger 6 aufgehängt bzw. gelagert sind und in ihrer Schneidstellung durch eine den Förderkanal 3 begrenzende Kanalwandung 7 hindurch in den genannten Förderkanal 3 hineinragen, vgl. Figur 2. Die Messer 5 wirken dabei mit dem genannten Förderrotor 2 zusammen, dessen Zinken an den Messern 5 vorbei bzw. zwischen benachbarten Messern hindurchstreichen, sodass die Messer 5 das Erntegut zerschneiden.

Die Messer 5 können, wie in den Figuren dargestellt, aufrecht stehend durch den Boden des Förderkanals 3 hindurch nach oben in den Förderkanal 3 hineinragen, oder alternativ auch hängend von oben herab in den Förderkanal 3 hineinragen und in diesem Fall durch eine deckenseitige Kanalwandung hindurchtreten.

Die Messer 5 können insbesondere an einem balkenförmigen Messerträger 6 gelagert sein, der sich quer über den Förderrotor 2 bzw. unter diesem hindurch erstrecken und beweglich gelagert sein kann, um das Schneidwerk 1 aus der in den Förderkanal 3 hineinragenden Arbeitsstellung herausschwenken zu können, beispielsweise um Montagearbeiten vornehmen zu können oder ggf. auch ohne Messer arbeiten zu können.

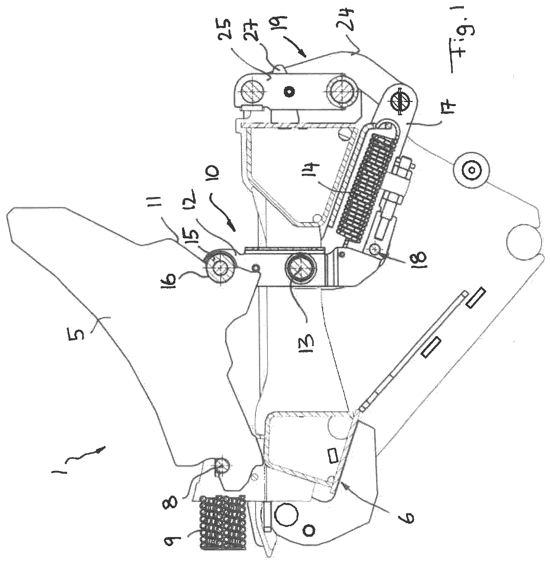

Die Messer 5 sind an dem Messerträger 6 beweglich gelagert, sodass sie zwischen der in Figur 1 gezeigten aktiven Schneidstellung, in der sie in den Förderkanal 3 hineinragen, und einer Ausweichstellung bzw. inaktiven Nichtschneidstellung, in der sie nicht oder nur reduziert in den genannten Förderkanal 3 hineinragen, hin und her verbringbar sind.

Wie die Figuren 1 und 2 verdeutlichen, können die Messer 5 beispielsweise an ihren - bezogen auf die Förderrichtung des Ernteguts durch den Förderkanal 3 - stromaufseitigen End- bzw. Kopfabschnitten schwenkbar um eine Messerschwenkachse 8 gelagert sein, beispielsweise an einem Schwenkachszapfen eingehängt sein, der translatorisch verschieblich, beispielsweise durch eine Federeinrichtung 9 elastisch nachgiebig gelagert sein kann, sodass die Messer 5 bei Auftreffen eines Hindernisses an der Schneide des Messers nicht nur um die genannte Messerschwenkachse 8 verkippen, sondern zunächst auch translatorisch wegfahren können, um den ersten Aufprall unabhängig vom Einschlagort des Hindernisses entlang der Schneide gleichmäßig bzw. bei gleichbleibender Widerstandskraft abfedern können.

Die genannte Messerschwenkachse 8 kann dabei außerhalb des Förderkanals 3 an dem Kopfabschnitt des Messers 5 angeordnet sein, vgl. Figur 1. Der genannte Kopfabschnitt des Messers 5 ist dabei der bezüglich der Förderrichtung 21 durch den Förderkanal 3 weiter vorne liegende, das heißt stromauf liegende Abschnitt des Messers 5, von dem aus sich die Schneide des Messers 5 immer tiefer, das heißt weiter vorspringend in den Förderkanal 3 hinein säbelförmig erstrecken kann, vgl. Figur 2.

Die Rückhaltemittel 10, die den Auslösevorgang des Messers 5 verhindern bzw. bremsen und ggf. wieder rückstellen, greifen vorzugsweise an einem dem genannten Kopfabschnitt des Messers 5 bzw. der Schneide des Messers 5 gegenüberliegenden Messerrücken 11 an, vgl. Figur 1, der in der genannten Förderrichtung 21 durch den Förderkanal 3 betrachtet einen hinteren Randabschnitt des Messers 5 bilden kann.

Die genannten Rückhaltemittel 11 umfassen elastisch nachgiebige bzw. elastisch vorgespannte Rückhalter 12, die gegen den genannten Messerrücken 11 drücken können, wobei vorteilhafterweise für jedes Messer 5 ein solcher Rückhalter 12 vorgesehen sein kann. Die elastisch nachgiebigen bzw. vorgespannten Rückhalter 12 steuern den Auslösevorgang eines jeweiligen Messers 5 bei Auftreffen eines Fremdkörpers und wirken dem Auslösen entgegen bzw. versuchen, das Messer 5 an sich in seiner Schneidstellung zu halten, wie sie Figur 1 zeigt.

Die genannte Rückenkontur 11 des Messers 5 kann sich, bezogen auf eine virtuelle Verbindungslinie zwischen der Messerschwenkachse 8 und dem Angriffspunkt des Rückhalters 12 am Messer 5, spitz- oder stumpfwinklig geneigt erstrecken, ggf. auch bogenförmig gekrümmt, sodass bei einem Eintauchen des Messers 5 bzw. Wegkippen des Messers 5 in Richtung aus dem Förderkanal 3 hinaus der genannte Rückhalter 12 an der Rückenkontur 11 entlangfahren bzw. darauf abrollen kann und entgegen seiner Vorspannung ausgelenkt wird.

Der genannte Rückhalter 12 ist vorteilhafterweise ein schwenkbar gelagerter Rückhaltehebel und kann um eine Schwenkachse 13 schwenkbar am Messerträger 6 gelagert sein. Die genannte Schwenkachse 13 kann sich parallel zur Messerschwenkachse 8 und/oder quer zu der Ebene erstrecken, in der die Messerschneide und/oder der Messerrücken 11 angeordnet sind.

Der genannte Rückhalter 12 wird dabei von einem Vorspannelement 14 mit einer Vorspannkraft bzw. einem Vorspannmoment vorgespannt, die/das versucht, den Rückhalter 12 zum Messerrücken 11 hin zu treiben bzw. Ausweichbewegungen des Messers 5 und entsprechenden Ausweichbewegungen des Rückhalters 12 entgegenwirkt.

Das Vorspannelement 14 kann ein Federelement sein bzw. als Feder ausgebildet sein, beispielsweise in Form einer mechanischen Schraubenfeder, wie sie die Figuren zeigen, ggf. aber auch in Form einer Spiralfeder oder auch einer Gasdruckfeder. Je nach Angriffspunkt des Vorspannelements 14 am Rückhalter 12 kann die Vorspannkraft eine Zugkraft oder eine Druckkraft und dementsprechend die Feder eine Zugfeder oder eine Druckfeder sein, wobei der genannte Angriffspunkt des Vorspannelements 14 am Rückhalter 12 von der Schwenkachse 13 beabstandet bzw. dazu exzentrisch positioniert sein kann.

In der in den Figuren gezeichneten Ausführung bildet das Vorspannelement 14 eine Zugfeder, die versucht, den Rückhalter 12 - gemäß der Blickrichtung der Zeichnungen - gegen die Uhr zu verdrehen, um den Eingriffskopf 15 des Rückhalters 12 gegen den Messerrücken 11 zu drücken. Der genannte Eingriffskopf 15 kann in eine darauf abgestimmte bzw. dazu passend ausgebildete Eingriffskontur 16 am Messerrücken 11 eingreifen, die beispielsweise in Form einer Eingriffsmulde ausgebildet sein kann, wenn der Eingriffskopf 15 eine ballige Kontur besitzt. Dort, wo der Eingriffskopf 15 den Messerrücken 11 berührt, liegt der vorgenannte Angriffspunkt des Rückhalters 12 am Messer 5.

Beispielsweise kann der Eingriffskopf 15 eine Eingriffsrolle umfassen, die in der genannten muldenförmigen Eingriffskontur 16 am Messerrücken 11 ruhen kann, wenn das Messer noch unausgelenkt in der schnittbereiten Schneidstellung gehalten wird, und dann auf dem Messerrücken 11 abrollen kann, wenn das Messer 5 durch ein Hindernis ausgelenkt wird.

Das Vorspannelement 14 ist an einem Spannelementeträger 17 montiert bzw. daran angelenkt, in den die aus der Vorspannung resultierenden Reaktionskräfte eingeleitet werden bzw. an dem das Vorspannelement 14 abgestützt ist. Der Rückhalter 12 ist gegenüber dem Spannelementeträger 17 beweglich, sodass Bewegungen des Rückhalters 12 relativ zum Spannelementeträger 17 Verformungen des Vorspannelements 17, insbesondere eine Längung der Feder, bewirken können.

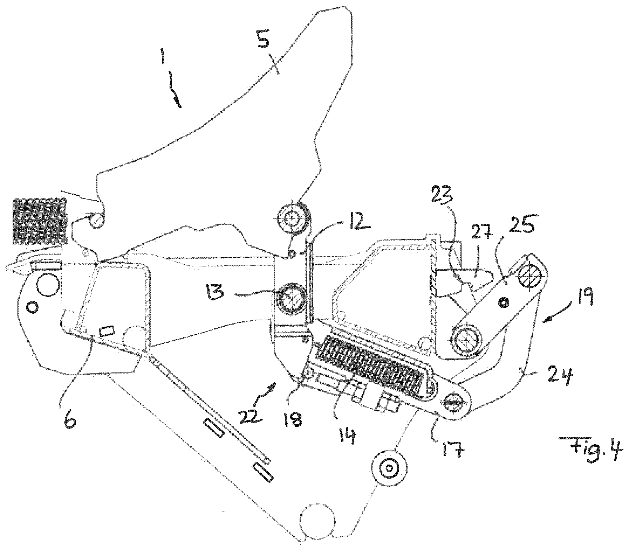

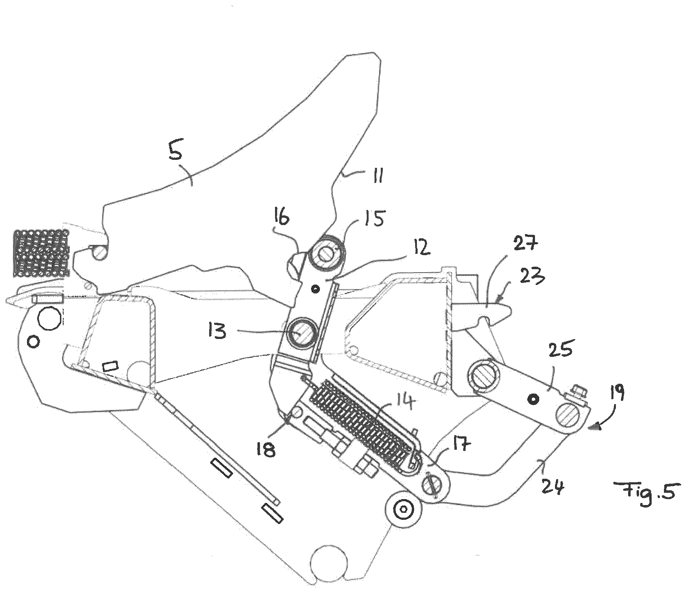

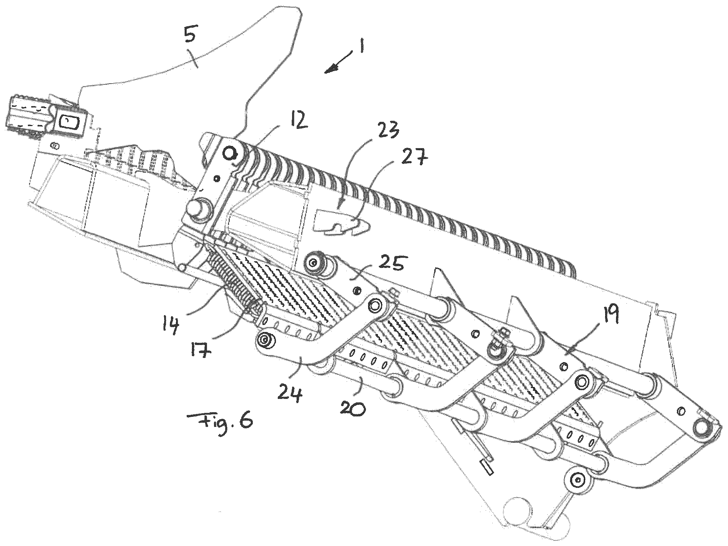

Der genannte Spannelementeträger 17 ist selbst wiederum beweglich gelagert, und zwar insbesondere schwenkbar um die genannte Schwenkachse 13, um die auch der Rückhalter 12 schwenken kann. Der Spannelementeträger 17 ist hierdurch schwenkbar am Messerträger 6 gelagert und kann zwischen der in Figur 1 gezeigten Messerhaltestellung und der in Figur 5 und Figur 6 gezeigten Messerentnahmestellung hin- und herschwenken, wobei die Figur 4 eine Zwischenstellung zeigt.

Der Spannelementeträger 17 nimmt dabei, das heißt beim Verschwenken aus der Messerhaltestellung gemäß Figur 1 zur Messerentnahmestellung gemäß Figur 5 und 6, den Rückhalter 12 auf seiner Schwenkbewegung mit, sodass der Rückhalter 12 bei vorgespannt bleibendem Vorspannelement 14 sich zusammen mit dem Spannelementehalter 17 dreht und aus seiner Rückhaltestellung, in der der Rückhalter 12 das Messer 5 bestimmungsgemäß in der Schneidstellung hält bzw. als Ausweichbewegungen entgegenwirkt, ebenfalls in die Messerentnahme- bzw. Messerentriegelungsstellung verschwenkt, vgl. vergleichend die Figuren 1 und 5.

Um den Rückhalter 12 mitzunehmen, ist zwischen Spannelementeträger 17 und Rückhalter 12 ein Mitnehmer 18 vorgesehen, der einen Anschlag bilden bzw. als Anschlag wirken kann. Der Mitnehmer 18 kann insbesondere von einem Konturpaar gebildet werden, das einerseits eine Anschlagskontur am Spannelementeträger 17 und andererseits eine Anschlagskontur am Rückhalter 12 umfassen kann, die miteinander in Eingriff geraten bzw. aneinander anstehen, wenn der Spannelementeträger 17 aus seiner Messerhaltestellung gemäß Figur 1 zur Messerentnahmestellung gemäß Figur 5 hin verschwenkt wird.

Der Mitnehmer 18 ist dazu ausgebildet, entspannende Bewegungen des Rückhalters 12 relativ zum Spannelementeträger 17 zu unterbinden, das heißt Bewegungen des Rückhalters 12 relativ zum Spannelementeträger 17 zu verhindern, die zu einem Entspannen des Vorspannelements 14 führen würden, wenn der Rückhalter vom Messerrücken 11 abhebt, weil der Spannelementeträger 17 und mit diesem auch der Rückhalter 12 in die Messerentnahmestellung bewegt wird.

Umgekehrte bzw. entgegengesetzte Bewegungen des Rückhalters 12 relativ zum Spannelementeträger 17, die zu einem Erhöhen der Vorspannung bzw. zu einem weiteren Spannen des Vorspannelements 14 führen, verhindert der Mitnehmer 18 jedoch nicht. Insbesondere steht dem Mitnehmer 18 keinen Bewegungen des Rückhalters 12 im Wege, die dem Rückhalter 12 aufgeprägt werden, wenn das Messer 5 aus der bestimmungsgemäßen Schneidstellung zur Ausweichstellung hin ausweicht. Betrachtet man die Anordnung der Rückhaltemittel 10 in einer Blickrichtung gemäß Figur 1, lässt der Mitnehmer 18 ein Verschwenken des Rückhalters 12 relativ zum Spannelementeträger 17 im Uhrzeigersinn zu, während Schwenkbewegungen gegen den Uhrzeigersinn, die über die vorgespannte Ausgangsstellung gemäß den Figuren 1 und 4 hinausgehen würden, verhindert werden.

Insbesondere kann der Mitnehmer 18 derart positioniert sein, dass in der betriebsbereiten Konfiguration des Schneidwerks 1, bei dem der Spannelementeträger 17 in seiner Messerhaltestellung gemäß Figur 1 ist und der Rückhalter 12 unter Vorspannung mit dem Messerrücken 11 in Eingriff steht, insbesondere in der für die schnittbereite Schneidstellung vorgesehene Eingriffskontur 16 sitzt, ein wenig Spiel zwischen den Anschlagskonturen des Mitnehmers 18 ist bzw. der genannte Mitnehmer 18 ein Stück weit Luft hat, so dass der Rückhalter 12 knapp nicht am Spannelementeträger 17 bzw. am Mitnehmer 18 ansteht. Dies dient an sich nicht einer erhöhten Vorspannung beim Anfahren der Messerhaltestellung, sondern soll sicherstellen, dass auch bei Fertigungstoleranzen bzw. produktionsbedingten Lageabweichungen der Rückhalter 12 satt am Messer 5 anliegt und das Messer 5 unter Vorspannung des Rückhalters 12 tatsächlich spielfrei am Messerträger 6 gehalten ist.

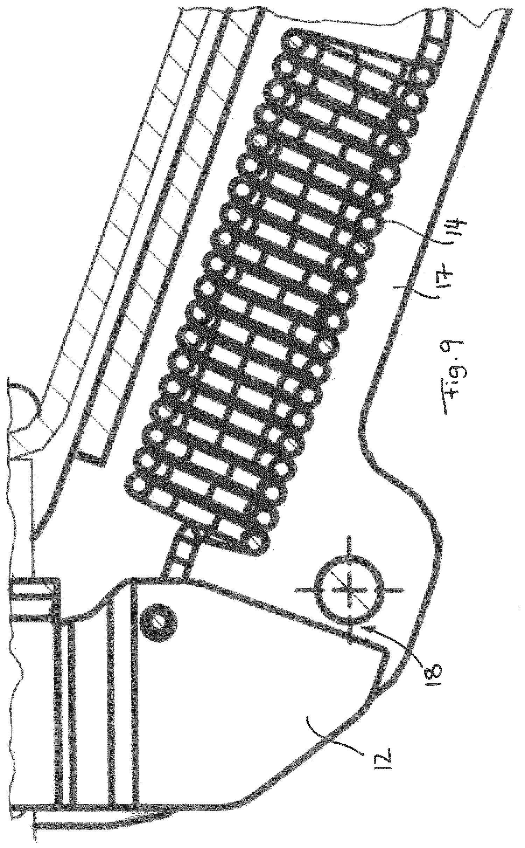

Der Mitnehmer 18 kann grundsätzlich starr bzw. unverstellbar ausgebildet sein, vgl. beispielsweise Figur 9, wobei beispielsweise der Mitnehmer 18 einen starren, integralen Bestandteil der Kontur des Vorspannträgers 14 bilden kann, beispielsweise einen angeschweißten Vorsprung.

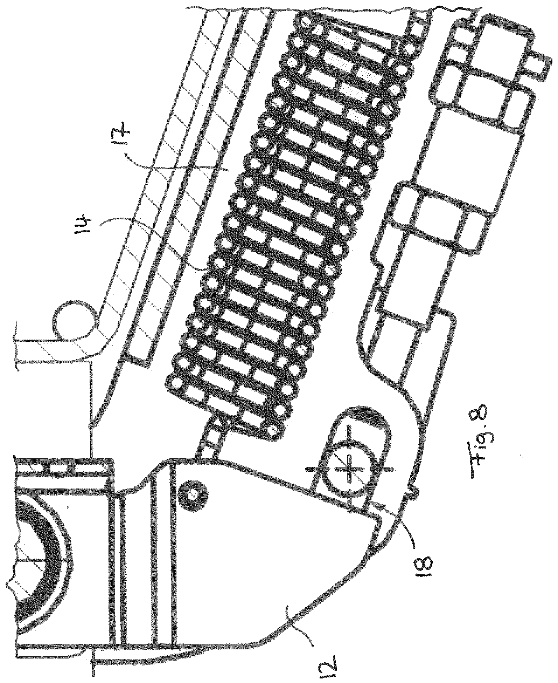

Vorteilhafterweise kann der Mitnehmer 18 aber auch einstellbar ausgebildet sein, um das zuvor genannte Spiel bzw. die Luft zum Rückhalter 12 passend einstellen zu können. Wie Figur 8 verdeutlicht, kann der Mitnehmer 18 beispielsweise einen verstellbaren Anschlag umfassen, der auf den Rückhalter 12 zu bzw. von diesem wegjustiert werden kann. Beispielsweise kann der Mitnehmer 18 eine Einstellschraube aufweisen, deren Verstellung zu einem Verschieben der Anschlagskontur führt.

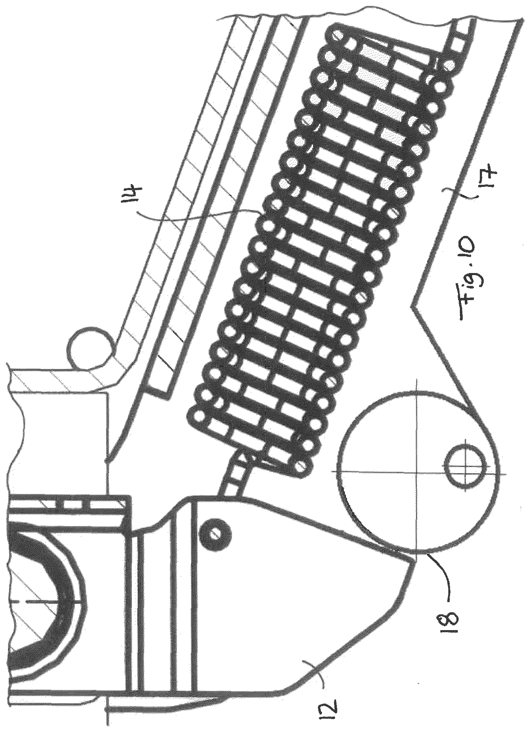

Alternativ oder zusätzlich kann der verstellbare Mitnehmer 18 aber auch einen Exzenter aufweisen, der verdrehbar, exzentrisch gelagert ist, vgl. Figur 10, sodass durch Verdrehen des exzentrischen Mitnehmers 18 ein Zustellen auf den Rückhalter 12 bzw. von diesem weg erreicht werden kann.

In Umkehrung der Ausführung nach den Figuren 8 und 10, kann der verstellbare Mitnehmer aber auch am Rückhalter 12 montiert sein und auf den Spannelementeträger 17 zu bzw. von diesem wegjustiert werden.

Wie die Figuren verdeutlichen, kann der Mitnehmer 18 unabhängig vom Vorspannelement 14 bzw. unabhängig von dessen Vorspannung verstellt werden und in verschiedene Positionen gebracht werden, ohne dass dies von der Vorspannung des Vorspannelements 14 beeinträchtigt werden würde.

Unabhängig von der Verstellbarkeit des Mitnehmers 18 kann auch dem Vorspannelement 14 eine Einstellvorrichtung zum Einstellen der Vorspannkraft in der arbeitsbereiten Rückhaltestellung zugeordnet sein. Beispielsweise kann das Vorspannelement einen längenveränderbaren Einhänger zum Einhängen am Rückhalter 18 oder zum Einhängen am Spannelementehalter 17 aufweisen. Alternativ oder zusätzlich kann beispielsweise auch der Spannelementehalter 17 einen positionsverstellbaren Eingriffspunkt für das Vorspannelement 14 aufweisen. Betrachtet man beispielsweise die Figuren 4 und 5 könnte der Eingriffspunkt für das Vorspannelement 14 in Wirkrichtung des Vorspannelements 14 verschiebbar sein bzw. in verschiedenen Stellungen am Spannelementehalter 17 fixiert werden.

Grundsätzlich wäre es aber auch möglich, das Vorspannelement 14 selbst hinsichtlich seiner Vorspannung einstellbar auszubilden, beispielsweise durch einen Federspanner oder bei einer Ausbildung des Vorspannelements 14 als Druckmittelzylinder durch einen einstellbaren Druckspeicher.

Da beim Verstellen des Spannelementeträgers 17 zwischen Messerhaltestellung und Messerentnahmestellung die Vorspannkraft des Vorspannelements 14 nicht überwunden werden muss bzw. die Bewegung des Spannelementeträgers 17 und auch die des mitgenommenen Rückhalters 12 unbeeinflusst von der Vorspannkraft erfolgen kann, können die Messer 5 mit sehr geringem Kraftaufwand entriegelt und wieder verriegelt werden.

Dies ermöglicht es auch, mehrere oder alle Messer 5 des Schneidwerks 1 gleichzeitig zentral zu entriegeln bzw. wieder zu verriegeln, ohne dass sich hierbei die Vorspannkräfte der entsprechenden Mehrzahl von Vorspannelementen 14 aufsummieren würde.

Wie Figur 6 verdeutlicht, können mehrere oder alle Spannelementeträger 17 durch einen zentralen Betätigungsmechanismus 19 gleichzeitig betätigt werden, ohne dass hierfür größere Kräfte aufzuwenden wären. Beispielsweise können die Spannelementeträger 17 der für die einzelnen Messer 5 vorgesehenen Rückhaltemittel 10 miteinander durch einen Querträger 20 verbunden sein, welcher durch den zentralen Betätigungsmechanismus 19 verfahrbar ist.

Um eine einfache Bedienung ohne großen Kraftaufwand zu gestatten, kann der Betätigungsmechanismus 19 - unabhängig davon, ob er zum zentralen Betätigen mehrerer Spannelementeträger 17 oder zur Einzelbetätigung nur eines Spannelementeträgers 17 vorgesehen ist - einen Hebelmechanismus mit einem Stellhebel 25 zum Verstellen des Spannelementehalters 17 aufweisen, wobei der genannte Stellhebel 25 vorteilhafterweise derart gelagert und angeordnet sein kann, dass der Stellhebel 25 in eine überstreckte Stellung fährt, wenn der Spannelementehalter seine Messerhaltestellung errreicht, so dass vom Spannelementehalter 17 her induzierte Kräfte den Stellhebel 25 nicht zurück, sondern noch weiter in die Fixierstellung treiben wollen bzw. würden, wenn dies gehen würde. Vorteilhafterweise kann der Stellhebel 25 einen ein Kniehebel zum Verstellen des Spannelementehalters 17 bilden, der gleichzeitig den Spannelementehalter 17 in der Messerhaltestellung fixieren und umgekehrt bei Betätigen des Kniehebels den Stellelementehalter 17 in die Messerentnahmestellung verfahren kann.

Insbesondere kann ein Zweischlag-ähnlicher Hebel- bzw. Kurbelmechanismus vorgesehen sein, der einen schwenkbar gelagerten Betätigerhebel als Stellhebel 25 aufweist, der ähnlich einer Skischuhschnalle geöffnet und umgekehrt in eine geschlossene, überstreckte Stellung verschwenkt werden kann. An dem genannten Betätigerhebel kann ein weiterer Stellhebel 24 als Übertragerhebel gelenkig befestigt sein, der selbst widerum gelenkig am Spannelementehalter 17 angelenkt ist, so dass der Betätigerhebel beim Verschwenken den Übertragerhebel mitnimmt, welcher wiederum den Spannelementehalter 17 zwischen seiner Messerhaltestellung und seiner Messerentnahmestellung verfährt.

Der Betätigungsmechanismus 19 kann also zwei Stellhebel 24, 25 umfassen, die gelenkig miteinander verbunden sind, wobei einer der Stellhebel 25 am Messerträger 6 oder einer damit starr verbundenen Konsole schwenkbar gelagert sein kann und der andere Stellhebel 24 gelenkig am Spannelementeträger 17 gelagert sein kann. Die Stellhebel 24, 25 können zusammen einen Kurbelmechanismus bilden, dessen Kurbel der genannte Stellhebel 25 bildet.

Wie ein Vergleich der Figur 4 mit der Figur 1 zeigt, sind die Längen der Stellhebel und die Positionen der gelenkigen Anlenk- und Verbindungspunkte derart gewählt, dass der Stellhebel 25 eine überstreckte halteposition anfährt, wenn der Spannelemetehalter 17 seine Messerhaltestellung gemäß Figur 1 anfährt. Mit anderen Worten, eine virtuelle Verbindungsgerade, die durch den Anlenkpunkt des Stellhebels 24 am Spannelementetrager 17 und den Verbindungspunkt der beiden Stellhebel 24, 25 geht, überstreicht beim Verschwenken zwischen Messerhalte- und Messerentnahmestellung des Spannelementeträgers 17, insbesondere kurz vor Erreichen der Messerhaltestellung, den Anlenkpunkt des Stellhebels 25 am Messerträger 6, wobei der genannte Anlenkpunkt des Stellhebels 25 am Messerträger 6 dabei zwischen dem Anlenkpunkt des Stellhebels 24 am Spannelementetrager 17 und den Verbindungspunkt der beiden Stellhebel 24, 25 liegt. Wäre/ist der Stellhebel 24 selbst gerade ausgebildet, würde der Stellhebel 24 selbst den Anlenkpunkt des Stellhebels 25 am Messerträger überstreichen.

Alternativ oder zusätzlich zu einem solchen Hebelmechanismus ist es aber auch möglich, den Spannelementehalter 17 in der Messerhaltestellung durch einen Riegel 27 zu sichern, beispielsweise durch einen türklinkenähnlichen Schnapper, der den Spannelementehalter 17 festhält und formschlüssig verriegelt, wenn dieser in die Messerhaltestellung gefahren wird, vgl. Figuren 1, 4 und 5. Der genannte Schnapper kann beispielsweise eine schwenkbare Sperrklinke aufweisen, in deren Rastmaul der Spannelementehalter 17 bzw. ein damit verbundenes Element wie z.B. der damit verbundenen Stellhebel 25 einfahren kann, wenn der Spannelementehalter 17 in seine Messerhaltestellung verfahren wird, während umgekehrt der Spannelementehalter 17 bzw. das damit verbundene Element wie der Stellhebel 25 in besagtem Rastmaul gefangen bleibt, wenn nicht die Sperrklinke geöffnet wird.

Alternativ oder zusätzlich zu einer solchen Sperrklinkenlösung kann als Fixiermechanismus 23 für den Spannelementehalter 17 aber auch beispielsweise einen Stellaktor 26 dienen, der an sich zum Verfahren des Spannelemetehalter 17 zwischen seinen Messerhalte- und -entnahmestellungen hin und her vorgesehen sein und in der jeweiligen Stellung verriegelt werden kann, insbesondere in der Messerhaltestellung, beispielsweise durch Blockieren oder Einbremsen des genannten Stellaktors 26 mittel einer Verriegelungs- und/oder Bremsvorrichtung. Beispielsweise kann ein Druckmittelzylinder als Stellaktor 26 vorgesehen sein, der durch Absperren einer oder mehrerer Druckkammern beispielsweise durch ein oder mehrere Ventile in der jeweiligen Stellung verriegelt bzw. eingebremst werden kann.

Der Fixiermechanismus 23 kann den Spannelementehalter 17 zumindest in der Messerhaltestellung fixieren, um sicherzustellen, dass der Rückhalter 12 in seiner schnittbereiten Messerhaltestellung verbleibt, wenn die Maschine in Betrieb genommen wird bzw. in Betrieb ist.

## Patentansprüche

1. Schneidwerk für eine Erntemaschine, insbesondere Ladewagen oder Ballenpresse, mit zumindest einem Messer (5), das in einer Schneidstellung in einen Förderkanal (3) für Erntegut hineinragend gehalten ist, wobei das Messer (5) an einem Messerträger (6) beweglich gelagert ist derart, dass das Messer (5) bei Auftreffen eines Hindernisses auf die Schneide des Messers (5) aus seiner Schneidstellung in eine Ausweichstellung verbringbar ist, wobei dem Messer (5) ein von einem Vorspannelement (14) elastisch vorgespannter Rückhalter (12) zum Halten in der Schneidstellung und/oder Entgegenwirken der Bewegung in die Ausweichstellung zugeordnet ist, und wobei ein Entriegler (22) zum Verstellen des Rückhalters (12) in eine Entriegelungsstellung zum Entnehmen des Messers (5) vorgesehen ist, **dadurch gekennzeichnet, dass** das Vorspannelement (14) an einem beweglich gelagertem Spannelementehalter (17) befestigt ist, der aus einer Messerhaltestellung in eine Messerentnahmestellung bewegbar gelagert ist und einen Mitnehmer (18) aufweist, der bei Bewegen des Spannelementehalters (17) in die genannte Messerentnahmestellung den Rückhalter (12) bei gespannt bleibendem Vorspannelement (14) in dessen Entriegelungsstellung mitnimmt und in der Messerhaltestellung des Spannelementehalters (17) Ausweichbewegungen des Rückhalters (12) aus dessen Haltestellung entsprechend Ausweichbewegungen des Messers (5) in die Ausweichstellung entgegen der Vorspannkraft des Vorspannelements zulässt.

2. Schneidwerk nach dem vorhergehenden Anspruch, wobei der Rückhalter (12) zusammen mit dem Spannelementeträger (17) ohne Überwindung der Vorspannkraft des Vorspannelements (14) aus der genannten Haltestellung in die genannte Entriegelungsstellung und zurück aus der Entriegelungsstellung in die Haltestellung bewegbar ist.

3. Schneidwerk nach einem der vorhergehenden Ansprüche, wobei der Mitnehmer (18) am Rückhalter (12) einen Ein- oder Angriffspunkt aufweist, der vom Ein- oder Angriffspunkt des Vorspannelements (14) am Rückhalter (12) beabstandet ist, und/oder am Rückhalter (12) einen größeren Hebelarm besitzt als das Vorspannelement (14).

4. Schneidwerk nach einem der vorhergehenden Ansprüche, wobei der Mitnehmer (18) dazu ausgebildet ist, entspannende Bewegungen des Rückhalters (12) relativ zum Spannelementeträger (17), die das Vorspannelement (14) gegenüber der Haltestellung des Rückhalters (12) in der schnittbereiten Schneidstellung des Messers (5) entspannen würde, zu unterbinden und spannende Bewegungen des Rückhalters (12) relativ zum Spannelementeträger (17), die zu einem weiteren Spannen des Vorspannelements (14) gegenüber der vorgespannten Stellung des Vorspannelements (14) in der Haltestellung des Rückhalters (12) in der schnittbereiten Schneidstellung des Messers (5) führen, zuzulassen.

5. Schneidwerk nach einem der vorhergehenden Ansprüche, wobei der Mitnehmer (18) in der Haltestellung des Rückhalters (12) in der schnittbereiten Schneidstellung des Messers (5) eine eingriffsfreie Spielpassung bildet und/oder mit dem Rückhalter (12) erst in spielfreien Eingriff gerät, wenn der Spannelementeträger (17) aus seiner Arbeitsstellung in die Messerentnahmestellung bewegt wird.

6. Schneidwerk nach einem der vorhergehenden Ansprüche, wobei der Mitnehmer (18) einstellbar ausgebildet ist und durch den Mitnehmer (18) verschiedene Mitnahmepositionen des Rückhalters (12) relativ zum Spannelementeträger (17) einjustierbar sind.

7. Schneidwerk nach einem der vorhergehenden Ansprüche, wobei der Mitnehmer (18) unabhängig von einer Vorspannung des Vorspannelements (14) einstellbar ist und/oder separate Einstellvorrichtungen zum voneinander unabhängigen Einstellen der Mitnahmeposition des Mitnehmers (18) einerseits und der Vorspannung des Vorspannelements (14) andererseits vorgesehen sind.

8. Schneidwerk nach einem der vorhergehenden Ansprüche, wobei der Mitnehmer (18) einen Anschlag bildet, insbesondere einen einstellbaren Anschlag, der von einer Stellschraube verstellbar ist oder einen drehbaren Exzenter aufweist.

9. Schneidwerk nach einem der vorhergehenden Ansprüche, wobei der Rückhalter (12) einen schwenkbar gelagerten Rückhaltehebel bildet und der Spannelementeträger (17) schwenkbar am Messerträger (6) gelagert ist, wobei der Rückhalter (12) und der Spannelementeträger (17) zueinander parallele, insbesondere koaxiale, Schwenkachsen (13) aufweisen oder um eine gemeinsame Schwenkachse (13) am Messerträger (6) oder an einen mit dem Messerträger (6) starr verbundenen Trägerteil gelagert sind.

10. Schneidwerk nach einem der vorhergehenden Ansprüche, wobei ein Fixiermechanismus (23) zum Fixieren des Spannelementeträgers (17) in der Messerhaltestellung vorgesehen ist, wobei der Fixiermechanismus (23) vorzugsweise eine formschlüssig einschnappende Rastklinke zum Halten des Spannelementeträgers (17) in der Messerhaltestellung aufweist.

11. Schneidwerk nach einem der vorhergehenden Ansprüche, wobei ein Betätigungsmechanismus (19) zum Verstellen des Spannelementeträgers (17) zwischen dessen Messerhalte- und -entnahmestellungen vorgesehen ist, wobei der genannte Betätigungsmechanismus (19) zwei miteinander gelenkig verbundene Stellhebel (24, 25) umfasst, von denen einer gelenkig am Spannelementeträger (17) angelenkt ist und der andere gelenkig am Messerträger (6) oder einem damit starr verbundenen Trägerteil angelenkt ist, wobei die Anlenkpunkte und die Längen der Stellhebel (24, 25) derart gewählt sind, dass der am Messerträger (6) oder dem damit starr verbundenen Trägerteil angelenkte Stellhebel (25) in eine überstreckte Stellung fährt, wenn der Spannelementeträger (17) seine Messerhaltestellung erreicht.

12. Schneidwerk nach einem der vorhergehenden Ansprüche, wobei ein Stellaktor, insbesondere ein Druckmittelzylinder, zum Verstellen des Spannelementeträgers (17) zwischen dessen Messerhalte- und -entnahmestellungen vorgesehen ist, wobei eine Verriegelungs- und/oder Bremsvorrichtung, insbesondere eine Sperrventilanordnung, zum Verriegeln und/oder Einbremsen des Stellaktors (26) zum Verriegeln und/oder Einbremsen des Spannelementeträgers (17) in der Messerhaltestellung vorgesehen ist.

13. Schneidwerk nach einem der vorhergehenden Ansprüche, wobei mehrere Rückhalter (12) für mehrere Messer (5) sowie mehrere Vorspannelemente (14), die auf mehreren Spannelementeträgern (17) befestigt sind, für die Rückhalter (12) vorgesehen sind, wobei ein gemeinsamer Betätigungsmechanismus (19) zum zentralen, gemeinsamen Verstellen der mehreren oder aller Spannelementeträger (17) und damit zum zentralen Entriegeln der mehreren oder aller Messer (5) vorgesehen ist und/oder die mehreren Spannelementeträger (17) durch einen gemeinsamen Querträger (20) miteinander verbunden sind und zu einer synchronisierten Bewegung zwischen Messerhalte- und - entnahmestellungen gezwungen sind.

14. Landwirtschaftliche Erntemaschine, insbesondere in Form eines Ladewagens oder einer Ballenpresse, umfassend ein Schneidwerk (1), das gemäß einem der vorhergehenden Ansprüche ausgebildet ist.

15. Landwirtschaftliche Erntemaschine nach dem vorhergehenden Anspruch, mit einem Aufsammler, insbesondere einer Pickup, zum Aufsammeln von auf dem Boden liegenden Erntegut und Übergeben des aufgesammelten Ernteguts an einen Förderrotor (2) zum Weiterfördern des aufgenommenen Ernteguts durch den Förderkanal (3) hindurch, in den die Messer (5) des Schneidwerks (1) hineinragen.
